Europäisches Patentamt

European Patent Office

Office européen des brevets

(19)

(11) **EP 1 584 900 A1**

(12) **EUROPEAN PATENT APPLICATION**

(43) Date of publication:
**12.10.2005 Bulletin 2005/41**

(51) Int Cl.⁷: **G01D 5/347**

(21) Application number: **05007445.9**

(22) Date of filing: **05.04.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (71) Applicant: **ALPS ELECTRIC CO., LTD.**<br>**Tokyo 145-8501 (JP)** |
| (30) Priority: **06.04.2004 JP 2004112243** | (72) Inventor: **Urakawa, Masatsugu**<br>**Ota-ku, Tokyo 145-8501 (JP)** |
| | (74) Representative: **Klunker . Schmitt-Nilson . Hirsch**<br>**Winzererstrasse 106**<br>**80797 München (DE)** |

(54) **Rotation angle detecting device**

(57)   To provide a rotation angle detecting device which can detect the rotation angle of a rotation body with high resolution and high precision. A code plate 3 which can be rotated in connection with a steering shaft and has a plurality of protrusion groups 3a, 3b arranged on an inner track and outer track T1, T2 and a plurality of the photo-interrupter groups 6A, 6B, 6C each having the combination of a pair of first photo-interrupters 6a arranged along the inner track T1 and a second photo-interrupter 6b arranged in the substantially center location of the photo-interrupters 6a are comprised. Among the photo-interrupters 6 in each the photo-interrupters 6A~6C, the light-emitting diode 61a of the first photo-interrupter 6a arranged at the inner track T1 is located at the outer circumferential side and the light-emitting diode 61b of the second photo-interrupter 6b arranged at the outer track T2 is located at the inner circumferential side.

FIG. 2

## Description

BACKGROUND OF THE INVENTION

1. Field of the Invention

The present invention relates to a rotation angle detecting device adapted to be used as an angle sensor for detecting the steering angle of a steering wheel of an automobile.

2. Description of the Related Art

Conventionally, as an example of this kind of the rotation angle detecting device, it is known that an angle sensor which comprises a rotation ring which can be intermittently rotated in accompanying with the rotation of a steering shaft (a rotation body), a light-shielding plate extended in a circular shape at a predetermined location of the rotation ring, and a plurality of photo-interrupters which are faced to each other so as to be located at the orbit of the light-shielding plate (For example, see Japanese Unexamined Patent Application Publication No. 11-108696 (3-6 pages, Fig. 5 and Fig. 9)). Each photo-interrupter has a LED (Light-emitting diode) and a photo-transistor (light-receiving element). The light-shielding plate passes between the LED and the photo-transistor of each photo-interrupter in accompanying with the rotation of the rotation ring and thus the rotation angle of the steering shaft is detected by the detected signal from each photo-interrupter.

Here, the LED and the photo-transistor which are components of each photo-interrupter are different from each other in the directivity characteristic. Further, in the angle sensor disclosed in the Japanese Unexamined Patent Application Publication No. 11-108696 (3-6 pages, Fig. 5 and Fig. 9), the photo-transistor having an inferior directivity characteristic (the directivity is wide) is positioned in the inner circumferential side and the LED having a superior directivity characteristic (the directivity is narrow) is positioned in the outer circumferential side. By this structure, the problem that the light emitted from the LED of any photo-interrupter is input to the photo-transistor of adjacent photo-interrupters as a disturbance light can be reduced, and thus the rotation angle of the steering shaft can be precisely detected. In the above-mentioned conventional rotation angle detecting device, the rotation angle of the steering shaft is detected by passing the light-shielding plate of the rotation ring between the LED and the photo-transistor of each of the plurality of the photo-interrupters. However, if another circular light-shielding plate is provided at the outside of the light-shielding plate in the rotation ring and a plurality of the other photo-interrupters are positioned in the orbit of the light-shielding plate located at the outside, similar to the photo-interrupters which are located at the inside, the rotation angle of the steering shaft can be detected with higher resolution. That is, providing the light-shielding plates on two adjacent tracks at the inside and outside of the rotation ring, respectively and combining the detected signals from the plurality of the photo-interrupters opposite to these light-shielding plate, the rotation angle of the rotation ring (steering shaft) can be detected with higher resolution. However, in case that the plurality of the photo-interrupters are positioned at the inside and outside in correspondence with two tracks, the light from the LED of the photo-interrupter positioned at the outside is emitted toward the photo-interrupter positioned at the inside. Thus, a new problem that the detection precision of the photo-interrupter positioned at the inside which receives this light as the disturbance light by the light-receiving element is deteriorated is generated.

## SUMMARY OF THE INVENTION

The present invention is made to solve the above problems, and it is an object of the present invention to provide a rotation angle detecting device which can detect the rotation angle of the rotation body with high resolution and high precision.
In order to accomplish the above-mentioned object, a rotation angle detecting device according to the present invention comprises a code plate which is rotated in connection with a rotation body and has a plurality of protrusion groups arranged on an inner track and an outer track which are close to each other in a predetermined interval and a plurality of photo-interrupters arranged opposite to the inner track and the outer track, wherein said protrusion group passes between a light-emitting diode and a light-receiving element of each photo-interrupter in accompanying with the rotation of said code plate, wherein, among said photo-interrupters, the light-emitting diode of a first photo-interrupter opposite to said inner track is located at the outer circumferential side and the light-emitting diode of a second photo-interrupter opposite to said outer track is located at the inner circumferential side.

In the rotation angle detecting device having the above-mentioned structure, the inner track on which the plurality of the protrusion groups are arranged and the outer track on which the plurality of the protrusion group are arranged are provided in the code plate, and the signals are read by the photo-interrupters opposite to the inner and outer tracks. Accordingly, by combining these signals, the rotation angle of the rotation body can be detected with high resolution. Further, the light emitted from the light-emitting diode of the photo-interrupter of the inner track is directed to the inner circumferential side and the light emitted from the light-emitting diode of the photo-interrupter of the outer track is directed to the outer circumferential side. Accordingly, even in case that the photo-interrupters of the inner and outer tracks are closed to each other, the photo-interrupter of one track can be prevented from receiving the light emitted from the light-emitting diode of the photo-interrupter of the other track as the disturbance light, the detection precision of the photo-interrupters can be reliably prevented from being deteriorated and thus the rotation angle of the rotation body can be precisely detected.

In the above-mentioned structure, it is preferable that a pair of the first photo-interrupters are arranged along the circumferential direction of said inner track and the second photo-interrupter is arranged in the substantially center location of the pair of said first photo-interrupters. By employing the structure, the first and second photo-interrupters can be integrated, and thus each photo-interrupter can be compactly mounted in the limited space of the device. Accordingly, the rotation angle detecting device can be miniaturized.

In the rotation angle detecting device having the above-mentioned structure, the inner track on which the plurality of the protrusion groups are arranged and the outer track on which the plurality of the protrusion group are arranged are provided in the code plate, and the signals are read by the photo-interrupters opposite to the inner and outer tracks. Accordingly, by combining these signals, the rotation angle of the rotation body can be detected with high resolution. Further, the light emitted from the light-emitting diode of the photo-interrupter of the inner track is directed to the inner circumferential side and the light emitted from the light-emitting diode of the photo-interrupter of the outer track is directed to the outer circumferential side. Accordingly, even in case that the photo-interrupters of the inner and outer tracks are closed to each other, the photo-interrupter of one track can be prevented from receiving the light emitted from the light-emitting diode of the photo-interrupter of the other track as the disturbance light, the detection precision of the photo-interrupters can be reliably prevented from being deteriorated and thus the rotation angle of the rotation body can be precisely detected.

BRIEF DESCRIPTION OF THE DRAWINGS

Fig. 1 is a partially exploded side view of an angle sensor according to the present invention;
Fig. 2 is a plan view showing inner tools of the angle sensor;
Fig. 3 is a perspective view showing the arrangement of photo-interrupters for a code plate included in the angle sensor;
Fig. 4 is an explanatory view illustrating the location relationship of first and second photo-interrupters composing each photo-interrupter group included in the angle sensor;
Fig. 5 is an explanatory view illustrating a location detecting sensor included in the angle sensor;
Fig. 6 is an explanatory view illustrating a light-shielding plate, a light-emitting diode and a light-receiving element included in the location detecting sensor;

Fig. 7 is an explanatory view illustrating the relationship between the slit of the light-shielding plate and the light-receiving element; and
Fig. 8 is an explanatory view illustrating absolute angle detection based on the light-receiving amount of the light-receiving element.

DESCRIPTION OF THE PREFERRED EMBODIMENT

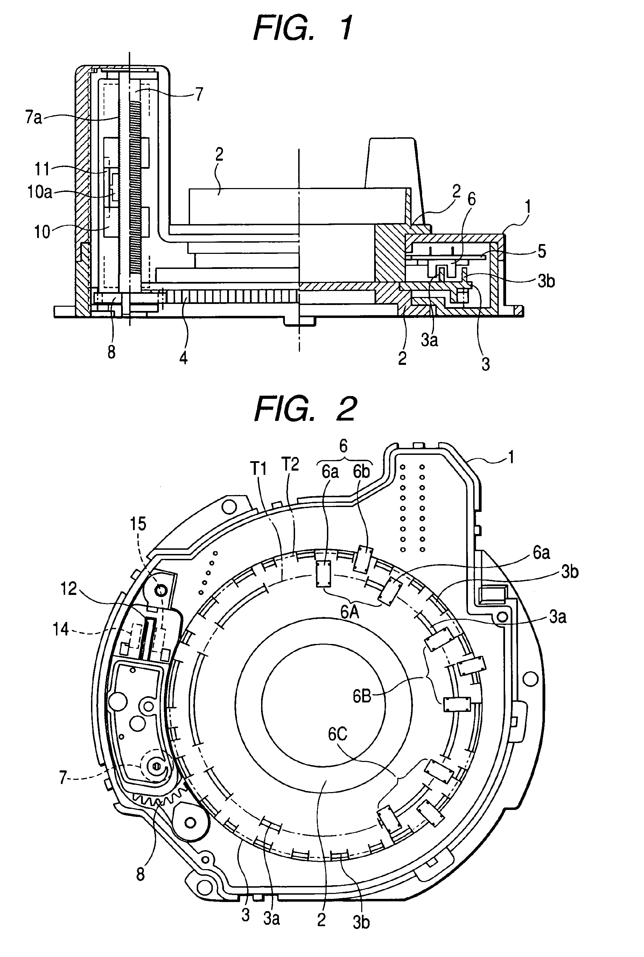

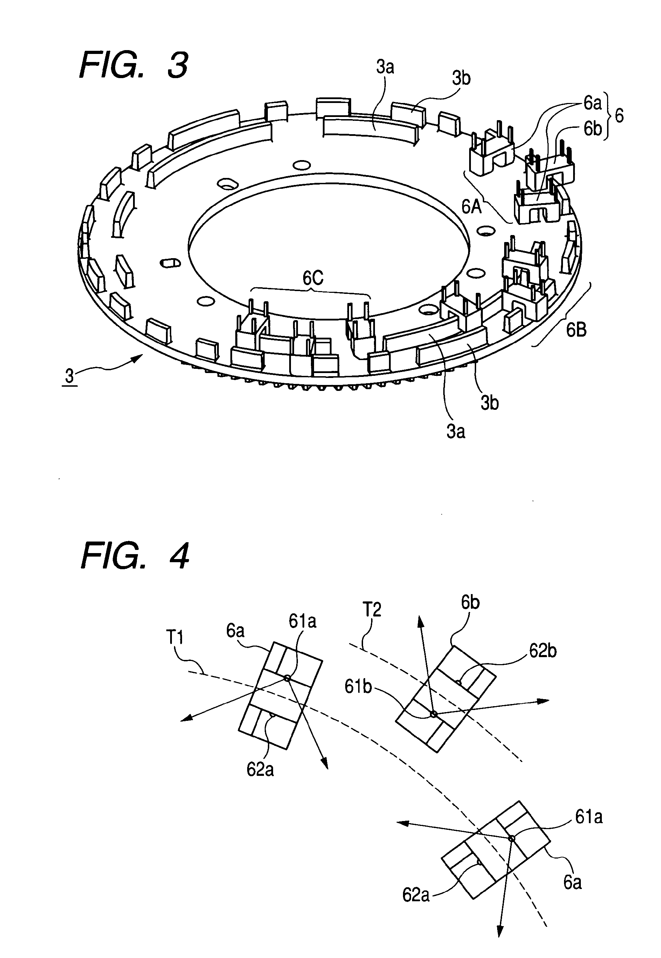

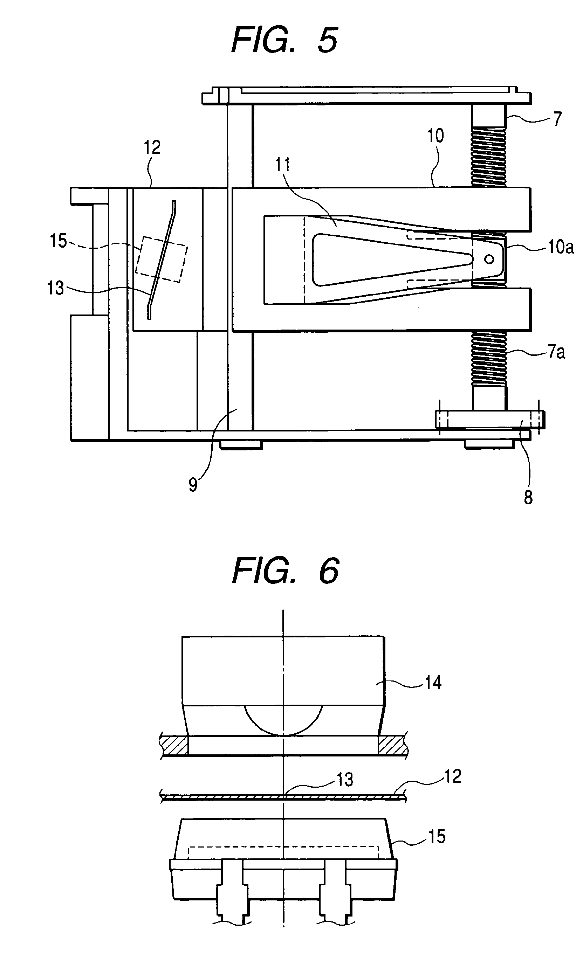

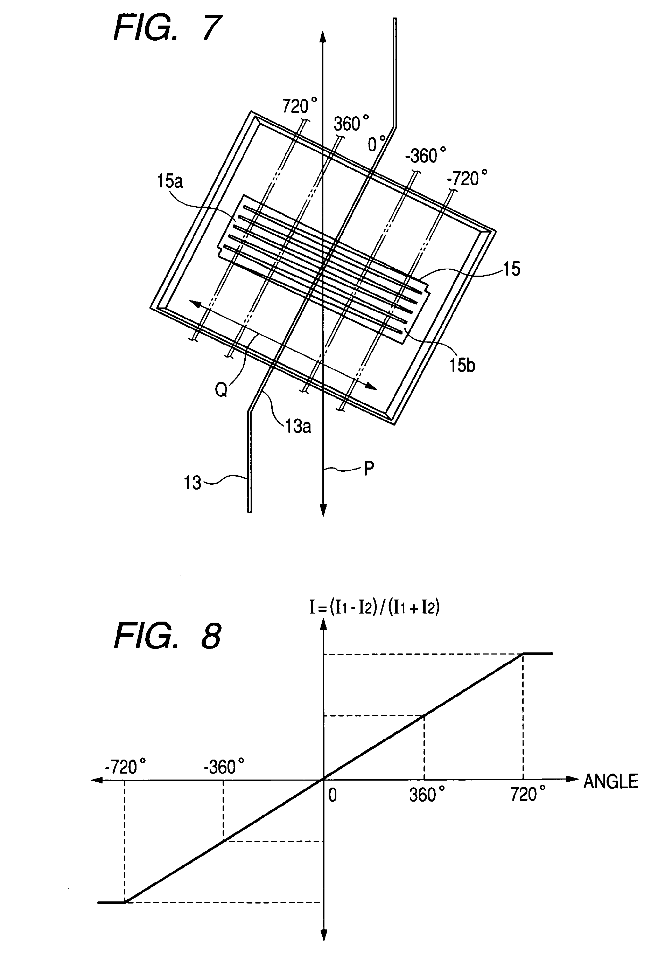

The embodiments of the present invention will now be described with reference to accompanying drawings. Fig. 1 is a partially exploded side view showing an angle sensor according to an embodiment of the present invention, Fig. 2 is a plan view showing inner tools of the angle sensor, Fig. 3 is a perspective view showing the arrangement of the photo-interrupters for a code plate included in the angle sensor, Fig. 4 is an explanatory view illustrating the location relationship of first and second photo-interrupters composing each photo-interrupter group included in the angle sensor, Fig. 5 is an explanatory view illustrating a location detecting sensor included in the angle sensor, Fig. 6 is an explanatory view illustrating a light-shielding plate, a light-emitting diode and a light-receiving element included in the location detecting sensor, Fig. 7 is an explanatory view illustrating the relationship between the slit of the light-shielding plate and the light-receiving element, and Fig. 8 is an explanatory view illustrating absolute angle detection based on the light-receiving amount of the light-receiving element.

As shown in the drawings, the angle sensor according to the present embodiment contains an outer case 1 fixed to the stator member of a steering tool (not shown) and a rotation member 2 is rotatably supported in the outer case 1. A steering shaft (not shown) is inserted into the center of the rotation member 2 and a steering wheel (not shown) is connected to the rotation member 2. Also, the rotation member 2 is integrally provided with a code plate 3. The code plate 3 is provided with an inner track T1 and an outer track T2 which are close to each other in a concentric circle shape. A plurality of inner protrusion groups 3a and a plurality of outer protrusion groups 3b are arranged on these tracks T1, T2 in a predetermined interval, and a first gear 4 is formed on the outer circumferential surface of the lower portion of the code plate 3. The outer case 1 is fixed with a print board 5, and the print board 5 is mounted with a plurality of photo-interrupters 6. These photo-interrupters 6 have a plurality of first photo-interrupters 6a and a plurality of second photo-interrupters 6b each corresponding to the inner protrusion groups 3a and the outer protrusion groups 3b, and the code plate 3 and the photo-interrupter 6 composes a rotary sensor. Here, the first and second photo-interrupters 6a, 6b are composed by facing and integrating chip-shaped LEDs 61a, 61b and chip-shaped photo-transistors 62a, 62b, respectively (See Fig. 4).

As shown in Figs. 2 and 3, in the arrangement of these photo-interrupters 6a, 6b, the combination of a pair of the first photo-interrupters 6a arranged along the circumferential direction of the inner track T1 and a second photo-interrupter 6b arranged at the substantially center location of the pair of the photo-interrupters 6a composes one group and three photo-interrupter groups 6A, 6B, 6C arranged in a predetermined interval along the circumferential direction of each of the tracks T1, T2 are composed. Also, as shown in Fig. 4, in each of the photo-interrupter groups 6A~6C, the LED 61a of the first photo-interrupter 6a opposite to the inner track T1 is positioned at the outer circumferential side, the photo-transistor 62a is positioned at the inner circumferential side. Further, the LED 61b of the second photo-interrupter 6b opposite to the outer track T2 is positioned at the inner circumferential side, the photo-transistor 62b is positioned at the outer circumferential side. Thereby, the light emitted from the LED 61a of the photo-interrupter 6a of the inner track T1 is directed to the inner circumferential side and the light emitted from the LED 61b of the photo-interrupter 6b of the outer track T2 is directed to the outer circumferential side.

Accordingly, when the inner protrusion group 3a and the outer protrusion group 3b pass between the LEDs 61a, 61b of the first and second photo-interrupters 6a, 6b and the photo-transistors 62a, 62b in accompanying with the rotation of the rotation member 2 to output the pulse signals from the photo-interrupters 6a, 6b, one of the photo-interrupters 6a, 6b of the tracks T1, T2 do not receive the light emitted from the LED of the photo-interrupter of the other track. Thereby, the detection precision of the photo-interrupters 6a, 6b can be reliably prevented from being deteriorated and thus the rotation angle of the steering shaft, that is, the steering angle of the steering wheel can be precisely detected.

As shown in Fig. 1, a lead screw 7 is rotatably supported in the outer case 1 and the shaft line direction of the lead screw 7 and the central axis of the rotation member 2 are set in parallel with each other. One end of the lead screw 7 is attached with a second gear 8 and the second gear 8 is engaged with the first gear 4 of the code plate 3. Also, as shown in Fig. 5, a guide shaft 9 extended in parallel with the lead screw 7 is fixed in the outer case 1, and a carriage 10 is slidingly fitted to the guide shaft 9. A spiral groove 7a is formed in the outer circumferential surface of the lead screw 7 and an engaging teeth part 10a formed integrally with the carriage 10 is engaged with the spiral groove 7a and the engaging teeth part 10a is pressed to the spiral groove 7a by a elastic applying force of a leaf spring 11 adhered to the carriage 10. Accordingly, if the lead screw 7 is rotated, the engaging teeth part 10a is moved along the spiral groove 7a, and, accordingly, the carriage 10 is linearly tripped in the shaft line direction of the lead screw 7 and the guide shaft 9. Also, a light-shielding plate 12 is integrally formed at the end of the part opposite to the engaging teeth part 10a of the carriage 10, and a slit 13 is formed in the light-shielding plate 12. On the other hand, a LED 14 and a 2-division photodiode 15 are arranged in the outer case 1, and, as shown in Fig. 6, the LED 14 and the 2-division photodiode 15 is faced to each other through the slit 13 of the light-shielding plate 12, and the light emitted from the LED 14 is transmitted through the slit 13 of the light-shielding plate 12 to the 2-division photodiode 15.

As shown in Fig. 7, the 2-division photodiode 15 is formed in a rectangular shape and is the differential photodiode having a first light-receiving part 15a and a second light-receiving part 15b. The first light-receiving part 15a and the second light-receiving part 15b are faced to each other at the short side of the rectangular shape, and the first and second light-receiving parts 15a, 15b are divided into two along the serrate-shaped division line having a plurality of wedge shapes. On the other hand, the slit 13 has a straight line part 13a inclined to the moved direction (the direction of the arrow P in Figure) of the carriage 10 and the straight line part 13a is set to be perpendicular to the long side of the rectangular shape of the 2-division photodiode 15. Accordingly, if the carriage 10 is moved into the direction of the arrow P in accompanying with the rotation of the lead screw 7, the straight line part 13a of the slit 13 is moved in the direction (the direction of the arrow Q in Figure) perpendicular to the long side between the short sides of the 2-division photodiode 15 which are faced to each other and the band (line) of the emitted light passing through the straight line part 13a is irradiated onto the first and second light-receiving parts 15a, 15b across the plural serrate-shaped division lines. Accordingly, the light-receiving amounts of the first and second light-receiving parts 15a, 15b is changed according to the moved location. Further, the slit 13 of the light-shielding plate 12, the LED 14 and the 2-division photodiode 15 compose the linear location-detecting sensor according to the present invention and thus the absolute angle from the neutral location of the steering wheel is detected by the output values of the first and second light-receiving parts 15a, 15b which are changed in accompanying with the movement of the carriage 10.

In other words, in case that the steering wheel is rotated two times (by +720~-720 degree) in the clockwise or counter-clockwise direction based on the neutral location, as shown in dashed dot line of Fig. 7, the relative location between the straight line part 13a and the first and second light-receiving parts 15a, 15b is changed according to the rotation angle of the steering wheel. Accordingly, by calculating the current values obtained from the first and second light-receiving parts 15a, 15b, the absolute angle from the neutral location of the steering wheel can be detected. For example, if the current value obtained from the first light-receiving part 15a is $I_1$ and the current value obtained from the second light-receiving part 15b is $I_2$, since these current values $I_1$ and $I_2$ are changed according to the moved location of the straight line part 13a, the next equation is calculated.

$$I = (I_1 - I_2) / (I_1 + I_2) \qquad (1)$$

As shown in Fig. 8, the absolute angle of the steering wheel can be detected as the analog change of the current value I.

Next, the operation of the angle sensor having the above-mentioned structure will be described.

If the steering wheel is rotated in any one of the positive and negative direction, the rotation member 2 is integrally rotated in connection with the steering wheel and this rotation force is delivered from the first gear 4 to the second gear 8 and thus the lead screw 7 is also rotated in connection with the rotation member 2. Since the rotation member 2 is integrally provided with the code plate 3, the relative location between the inner and outer protrusion groups 3a, 3b of the code plate 3 and the first and second photo-interrupters 6a, 6b are changed in accompanying with the rotation of the rotation member 2, respectively, and the rotation amount and the rotation direction of the steering wheel for rotating the rotation member 2 two times are detected by the pulse signals output from the photo-interrupters 6a, 6b in the photo-interrupter groups 3A~3C. The code plate 3 and the photo-interrupter 6 function as the incremental rotary encoder. Also, since the steering wheel is rotated two times (by +720~-720 degree) in the clockwise and counterclockwise direction based on the neutral location in the present embodiment, the rotation amount and the rotation direction in the whole rotation range (±720 degree) of the steering wheel are detected based on the output signal of each photo-interrupter 6.

In addition, since the engaging teeth part 10a of the carriage 10 is engaged with the spiral groove 7a of the lead screw 7, the carriage 10 is linearly tripped in the shaft line direction of the lead screw 7 and the guide shaft 9 in accompanying with the rotation of the lead screw 7 and thus the light-shielding plate 12 provided integral with the carriage 10 is moved between the LED 14 and the 2-division photodiode 15. At the result, the straight line part 13a of the slit 13 formed in the light-shielding plate 12 is moved in the direction of the arrow Q of Fig. 7 between the facing short sides of the 2-division photodiode 15, the light-receiving amounts of the first and second light-receiving parts 15a, 15b are changed according to the moved location, and thus the absolute angle from the neutral location of the steering wheel is detected based on the output values of the first and second light-receiving parts 15a, 15b. In this case, if the current values $I_1$, $I_2$ output from the first and second light-receiving parts 15a, 15b are detected and the current value I is calculated by replacing the current values $I_1$, $I_2$ to the equation (1), as shown in Fig. 8, the absolute angle of the steering wheel can be detected as the analog change of the current value I. Also, since the steering wheel is rotated two times (by +720--720 degree) in the clockwise and counterclockwise direction based on the neutral location in the present embodiment, the absolute angle in the whole rotation range (±720 degree) of the steering wheel is detected based on the output signal of the 2-division photodiode 15.

As such, in the rotation angle detecting device according to the present invention, the inner track T1 on which the plurality of the inner protrusion groups 3a are arranged is provided in the code plate 3 and the outer track T2 on which the plurality of the outer protrusion groups 3b are arranged is provided at the outside of the inner track T1. Further, the pulse signals output from the photo-interrupter groups 3A~3C having the photo-interrupters 6a, 6b which are arranged to be closed to the two tracks T1, T2, respectively, are combined. Accordingly, the rotation angle of the rotation member (the rotation body) 2 which is rotated in connection with the steering wheel can be detected with high resolution. In addition, in each of the photo-interrupters 3A-3C, the light emitted from the LED 61a of the photo-interrupter 6a of the inner track T1 is directed to the inner circumferential side and the light emitted from the LED 61b of the photo-interrupter 6b of the outer track T2 is directed to the outer circumferential side. Accordingly, the photo-interrupter 6a (6b) of one track T1 (T2) can be prevented from receiving the light emitted from the LED 61b (61a) of the photo-interrupter 6b (6a) of the other track T2 (T1), the detection precision of the photo-interrupters 6a, 6b can be prevented from being deteriorated, and thus the rotation angle of the steering shaft, that is, the steering angle of the steering wheel can be detected with high precision.

In addition, since the plurality of the photo-interrupter groups 6A, 6B, 6C each having the combination of a pair of the first photo-interrupters-6a arranged along the circumferential direction of the inner track T1 and the second photo-interrupter 6b arranged in the substantially center location of the photo-interrupters 6a are composed, the photo-interrupters 6a, 6b can be integrated in each of the photo-interrupter groups 6A, 6B, 6C and each photo-interrupter 6 can be compactly mounted in the limited space of the device. Accordingly, the rotation angle detecting device can be miniaturized.

## Claims

1. A rotation angle detecting device, comprising a code plate which is rotated in connection with a rotation body and has a plurality of protrusion groups arranged on an inner track and an outer track which are close to each other in a predetermined interval and a plurality of photo-interrupters arranged opposite to the inner track and the outer track, wherein said protrusion group passes between a light-emitting diode and a light-receiving element of each photo-interrupter in accompanying with the rotation of said code plate,

wherein, among said photo-interrupters, the light-emitting diode of a first photo-interrupter opposite to said inner track is located at the outer circumferential side and the light-emitting diode of a second photo-interrupter opposite to said outer track is located at the inner circumferential side.

2.  The rotation angle detecting device according to Claim 1, a pair of said first photo-interrupters are arranged along the circumferential direction of said inner track and said second photo-interrupter is arranged in the substantially center location of said pair of the first photo-interrupters.

# FIG. 1

# FIG. 2

*FIG. 3*

*FIG. 4*

# FIG. 5

# FIG. 6

*FIG. 7*

$$I = (I_1 - I_2)/(I_1 + I_2)$$

*FIG. 8*

European Patent
Office

**EUROPEAN SEARCH REPORT**

Application Number

EP 05 00 7445

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 248 993 B1 (BUNSELMEIER DIRK ET AL) 19 June 2001 (2001-06-19) * column 4, line 4 - line 15; figure 1 * ----- | 1,2 | G01D5/347 |
| | | | **TECHNICAL FIELDS SEARCHED (Int.Cl.7)** |
| | | | G01D |

The present search report has been drawn up for all claims

| Place of search | Date of completion of the search | Examiner |
|---|---|---|
| The Hague | 5 August 2005 | Lloyd, P |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 05 00 7445

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2005

| Patent document cited in search report | | Publication date | Patent family member(s) | | Publication date |
|---|---|---|---|---|---|
| US 6248993 | B1 | 19-06-2001 | BR | 9903445 A | 10-10-2000 |
| | | | DE | 19936211 A1 | 17-02-2000 |

EPO FORM P0459